Europäisches Patentamt

European Patent Office

Office européen des brevets

(11) Veröffentlichungsnummer: **0 313 890 B1**

(12) **EUROPÄISCHE PATENTSCHRIFT**

(45) Veröffentlichungstag der Patentschrift: **24.06.92**

(51) Int. Cl.5: **C04B 41/88**, C03C 17/10, //C03C17/30,C04B41/84

(21) Anmeldenummer: **88116479.2**

(22) Anmeldetag: **05.10.88**

(54) **Verwendung von Glanzedelmetallpräparaten für mikrowellenbeständige Dekore auf Geschirrteilen.**

(30) Priorität: **29.10.87 DE 3736583**

(43) Veröffentlichungstag der Anmeldung:
**03.05.89 Patentblatt 89/18**

(45) Bekanntmachung des Hinweises auf die
Patenterteilung:
**24.06.92 Patentblatt 92/26**

(84) Benannte Vertragsstaaten:
**AT BE CH DE ES FR GB GR IT LI LU NL SE**

(56) Entgegenhaltungen:
**DE-A- 2 260 215**
**DE-A- 3 245 392**
**DE-B- 1 421 865**
**DE-C- 3 721 000**
**US-A- 2 490 399**

(73) Patentinhaber: **Degussa Aktiengesellschaft**
**Weissfrauenstrasse 9**
**W-6000 Frankturt am Main 1(DE)**

(72) Erfinder: **Lotze, Marion, Dr. Dipl.-Chem.**
**Am Galgenberg 18**
**W-6451 Hammersbach(DE)**
Erfinder: **Mehner, Hans**
**Dorttenfeldstrasse 3**
**W-6230 Frankturt 80(DE)**
Erfinder: **Kleinschmit, Peter, Dr. Dipl.-Chem.**
**Wildaustrasse 19**
**W-6450 Hanau 9(DE)**

**Beschreibung**

Die Erfindung betrifft die Verwendung von Glanzedelmetallpräparaten für mikrowellenbeständige Dekore auf Geschirrteilen aus silikatischen Werkstoffen, wie Porzellan, Keramik, Steingut oder Glas.

In üblichen Edelmetalldekoren auf Geschirrteilen aus Porzellan, Glas, Steingut oder Keramik baut sich bei Einwirkung von Mikrowellenstrahlung ein so hohes elektrisches Potential auf, daß es aufgrund der Potentialdifferenz zwischen Edelmetallschicht und dem Garraum des Mikrowellen-Gerätes zu elektrischen Funkenentladungen kommt, die eine Zerstörung des Dekors zur Folge haben.

In der DE-PS 36 15 272 wird ein mikrowellenfestes Geschirrteil aus silikatischen Werkstoffen mit einem Edelmetalldekor beschrieben, bei dem die Dekore nicht flächig sondern in Rasterelementen aufgetragen sind, wobei die maximale Ausdehnung eines Rasterelements 5 mm und die Abstände zweier benachbarter Rasterelemente mindestens 0,2 mm betragen müssen bzw. dürfen. Diese Dekore besitzen jedoch den Nachteil, daß das menschliche Auge die Rasterung erkennen kann und deshalb kein gleichmäßiges, flächiges Dekor herstellbar ist.

Aus der DE-AS 14 21 865 sind Glanzedelmetallpräparate bekannt, die aus einer organischen Edelmetallverbindung, einem löslichen Flußmittel in Form von organischen Unedelmetallverbindungen und einem organischen Träger bestehen.

Als Flußmittel werden metallorganische Verbindungen in Mengen von 0,3 bis 3 Mol Unedelmetall pro Mol Edelmetall eingesetzt. Diese Präparate dienen zur Herstellung edelmetallhaltiger Filme auf Gegenständen aus Glaskeramik. Über eine eventuelle Mikrowellenbeständigkeit entsprechender Dekore werden keine Angaben gemacht.

In der nicht vorveröffentlichten Druckschrift EP-A 0 296 312 werden auf silikatischen Unterlagen eingebrannte mikrowellenbeständige Edelmetall-Dekorationen beschrieben. Der Zusatz spezieller organischer Siliziumverbindung wird aber nicht genannt.

Es war Aufgabe der vorliegenden Erfindung, weitere Glanzedelmetallpräparate zu finden, die mikrowellenbeständige Dekore auf Geschirrteilen aus silikatischen Werkstoffen liefern.

Diese Aufgabe wird gelöst durch die Verwendung von Glanzedelmetallpräparaten, bestehend aus einer Organogoldverbindungen, gegebenenfalls in Mischung mit Organosilber-, Organopalladium- und/oder Organoplatinverbindungen, einem organischen Träger und einem Flußmittel auf organischen Metallverbindungen, daß eine organische Siliziumverbindung mit drei hydrolysierbaren Gruppen am Siliziumatom in Mengen von 0,1 bis 2 Mol Silizium pro Mol Edelmetall enthält.

Vorzugsweise verwendet man Glanzedelmetallpräparate, die als organische Siliziumverbindung eine Verbindung der allgemeinen Formel $Y_3SiX$ enthalten, wobei

Y = Alkoxy, Aryloxy, Aralkoxy, Acyloxy, Ketoximyl, Mercapto, Halogeno und/oder Pseudohalogeno,
X = Alkyl, Aryl, Aralkyl, Alkenyl, Cycloalkenyl, Vinyl und/oder heteroatomsubstituierte Analoga
bedeutet.

Als vorteilhaft haben sich siliziumorganische Verbindungen der allgemeinen Formel $(ZO)_3$-SiX erwiesen, bei der Z = -R, -R$^1$-OR oder -C(O)R$^2$ ist und

R = linearer oder verzweigter einwertiger Kohlenwasserstoffrest mit 1 bis 24 C-Atomen, Cycloalkyl mit 1 bis 8 C-Atomen, Aryl mit 6 bis 10 C-Atomen oder Aralkyl mit 7 bis 15 C-Atomen,
R$^1$ = linearer oder verzweigter zweiwertiger Kohlenwasserstoffrest mit 2 bis 10 C-Atomen und
R$^2$ = linearer oder verzweigter einwertiger Kohlenwasserstoffrest mit 1 bis 10 C-Atomen
bedeutet.

Günstig ist es auch, eine organische Siliziumverbindung der allgemeinen Formel $(ZO)_3SiX$ zu verwenden, bei der

X = -R$^2$-V bedeutet, mit V = Halogeno, Mercapto, Amino, Dimethylamino, Carbamoyloxy, Ureido, Azido, Thiocyanato, Isocyanato, Methacryloxy, 3,4-Epoxycyclohexyl, 2,3-Epoxypropoxy oder der Gruppe -NH-R$^2$-Si(OZ)$_3$ oder -S$_4$-R$^2$-Si(OZ)$_3$ und
R$^2$ = linearer oder verzweigter zweiwertiger Kohlenwasserstoffrest mit 1 bis 10 C-Atomen, insbesondere 1,3-Propylen.

Es hat sich überraschenderweise gezeigt, daß Glanzedelmetallpräparate mit diesen speziellen organischen Siliziumverbindungen als Flußmittelbestandteil flächige Edelmetalldekore auf silikatischen Unterlagen ergeben, die mikrowellenbeständig in den üblichen häuslichen Mikrowellen-Geräten sind, in Zeiträumen, die für die Erwärmung von Lebensmittel und Speisen benötigt werden.

Zur Herstellung der Dekore können handelsübliche Glanzedelmetallpräparate verwendet und die üblichen Auftragstechniken benutzt werden. Die Bestandteile der Präparate können beispielsweise aus der DE-AS 14 21 865 entnommen werden.

Folgende Beispiele sollen einige Edelmetallpräparate zeigen, die mikrowellenbeständige Dekore auf Geschirrteilen ergeben.

1. Ein Glanzedelmetallpräparat der Zusammensetzung

| | |
|---|---|
| Goldsulforesinat (56 % Au) | 17,9 Gew.% |
| Silbersulforesinat (20 % Ag) | 5,0 " |
| Rhodiumsulforesinat (5 % in Terpineol) | 1,0 " |
| Wismutresinat (7 % in Terpineol) | 1,0 " |
| Chromresinat (3 % Terpineol) | 1,5 " |
| Bis [3-(Triethoxysilyl) propyl] tetrasulfid | 13,4 " |
| Asphalt (50 % in Terpineol) | 25,0 " |
| Kolophoniummodifiziertes Phenolharz | 15,0 " |
| Pine Oil | 20,2 " |

wird homogenisiert und 8 Stunden bei 50° C getempert. Nach dem Abziehbildverfahren wird auf Hartporzellan eine Fläche von 4,5 x 6 cm bedruckt. Nach dem Brennen bei 820° C erhält man eine glänzende Goldschicht, die im Mikrowellenherd einer elektromagnetischen Strahlung von 2,45 GHz/720 Watt schadlos ausgesetzt werden kann.

2. Ein Glanzedelmetallpräparat der Zusammensetzung

| | |
|---|---|
| Goldsulforesinat (56 % Au) | 17,9 Gew.% |
| Silbersulforesinat (20 % Ag) | 5,0 " |
| Palladiumsulforesinat (8 % in Terpineol) | 6,3 " |
| Rhodiumsulforesinat (5 % in Terpineol) | 1,0 " |
| Wismutresinat (7 % in Terpineol) | 1,0 " |
| Chromresinat (3 % in Terpineol) | 1,5 " |
| Triethoxysilylpropylcarbamat | 11,4 " |
| Kolophoniummodifiziertes Phenolharz | 20,0 " |
| Terpineol | 35,9 " |

wird mit einem Pinsel auf Hartporzellan aufgetragen und bei 820° C gebrannt. Auch hier erhält man ein Dekor, das mikrowellenbeständig ist.

Weitere Beispiele für besonders geeignete organische Siliziumverbindungen sind:

3-Methacryloxypropyltrimethoxysilan,

3-Aminopropyltrimethoxysilan,

Chlormethyltriethoxysilan

$\beta$- (3,4-Epoxycyclohexyl)ethyltrimethoxysilan

1,6-Bis (Trimethoxylsilyl)ethan

Bis [3-(Triethoxysilyl)propyl] amin

**Patentansprüche**

**1.** Verwendung von Glanzedelmetallpräparaten, bestehend aus einer Organgoldverbindung, gegebenenfalls in Mischung mit Organosilber-, Organopalladium- und/oder Organoplatinverbindungen, einem organischen Träger und einem Flußmittel aus organischen Metallverbindungen, das eine organische Siliziumverbindung mit drei hydrolysierbaren Gruppen am Siliziumatom in Mengen von 0,1 bis 2 Mol Silizium pro Mol Edelmetall enthält, für mikrowellenbeständige Dekore auf Geschirrteilen aus silikatischen Werkstoffen.

**2.** Ausführungen nach Anspruch 1,
dadurch gekennzeichnet,
dass als organische Siliziumverbindung eine Verbindung der allgemeinen Formel $Y_3SiX$ verwendet wird, bei der

Y = Alkoxy, Aryloxy, Aralkoxy, Acyloxy, Ketoximyl, Mercapto; Halogeno und/oder Pseudohalogeno und

X = Alkyl, Aryl, Aralkyl, Alkenyl, Cycloalkenyl, Vinyl und/oder heteroatomsubstituierte Analoga bedeutet.

3.  Ausführungsform nach Anspruch 1 und 2,
    dadurch gekennzeichnet,
    dass als organische Siliziumverbindung eine Verbindung der allgemeinen Formel $(ZO)_3SiX$ verwendet wird,
    bei der Z = -R, $-R^1$-OR oder $-C(O)R^2$ ist und
    R = linearer oder verzweigter einwertiger Kohlenwasserstoffrest mit 1 bis 24 C-Atomen, Cycloalkyl mit 1 bis 8 C-Atomen, Aryl mit 6 bis 10 C-Atomen oder Aralkyl mit 7 bis 15 C-Atomen,
    $R^1$ = linearer oder verzweigter zweiwertiger Kohlenwasserstoffrest mit 2 bis 10 C-Atomen und
    $R^2$ = linearer oder verzweigter einwertiger Kohlenwasserstoffrest mit 1 bis 10 C-Atomen
    bedeutet.

4.  Ausführungsform nach Anspruch 1 bis 3,
    dadurch gekennzeichnet,
    dass als organische Siliziumverbindung eine Verbindung der allgemeinen Formel $(ZO)_3SiX$ verwendet wird, bei der
    X = $-R^2$-V bedeutet, mit V = Halogeno, Mercapto, Amino, Dimethylamino, Carbamoyloxy, Ureido, Azido, Thiocyanato, Isocyanato, Methacryloxy, 3,4-Epoxycyclohexyl, 2,3-Epoxypropoxy oder der Gruppe $-NH-R^2-Si(OZ)_3$ oder $-S_4-R^2-Si(OZ)_3$ und
    $R^2$ = linearer oder verzweigter zweiwertiger Kohlenwasserstoffrest mit 1 bis 10 C-Atomen, insbesondere 1,3-Propylen.

**Claims**

1.  The use of bright noble metal preparations consisting of an organogold compound, optionally in admixture with organosilver, organopalladium and/or organoplatinum compounds, an organic support and a flux of organometallic compounds, which contains an organosilicon compound containing three hydrolyzable groups at the silicon atom in quantities of 0.1 to 2 mol silicon per mol noble metal, for microwave-resistant decorations on crockery of silicate-containing materials.

2.  The use claimed in claim 1, characterized in that the organosilicon compound used is a compound corresponding to the general formula $Y_3SiX$ in which
    Y    is alkoxy, aryloxy, aralkoxy, acyloxy, ketoximyl, mercapto, halo and/or pseudohalo and
    X    is alkyl, aryl, aralkyl, alkenyl, cycloalkenyl, vinyl and/or heteroatom-substituted analogs.

3.  The use claimed in claims 1 and 2, characterized in that the organosilicon compound used is a compound corresponding to the general formula $(ZO)_3SiX$ in which
    Z = -R, $-R^1$-OR or $-C(O)R^2$ and
    R = linear or branched monofunctional $C_{1-24}$ hydrocarbon radical, $C_{1-8}$ cycloalkyl, $C_{6-10}$ aryl or $C_{7-15}$ aralkyl,
    $R^1$ = linear or branched difunctional $C_{2-10}$ hydrocarbon radical and
    $R^2$ = linear or branched $C_{1-10}$ monofunctional hydrocarbon radical.

4.  The use claimed in claims 1 to 3, characterized in that the organosilicon compound used is a compound corresponding to the general formula $(ZO)_3SiX$ in which
    X = $-R^2$-V with V = halo, mercapto, amino, dimethylamino, carbamoyloxy, ureido, azido, thiocyanato, isocyanato, methacryloxy, 3,4-epoxycyclohexyl, 2,3-epoxypropoxy or the group $-NH-R^2-Si(OZ)_3$ or $-S_4-R^2-Si(OZ)_3$ and
    $R^2$ = linear or branched difunctional $C_{1-10}$ hydrocarbon radical, particularly 1,3-propylene.

**Revendications**

1.  Utilisation de préparations en métal noble brillant, se composant d'un composé organo-aurique, le cas échéant en mélange avec des composés organo-argentiques, organopalladiques et/ou organoplatiniques, d'un support organique et d'un agent de fusion à base de composés métalliques organiques, qui renferme un dérivé organique du silicium avec trois groupes hydrolysables sur l'atome de silicium, en quantités allant de 0,1 à 2 mol de silicium par mol de métal noble, pour des décors résistants aux microondes, sur des pièces de vaisselle à base de matériaux silicatés.

2. Exécutions selon la revendication 1, caractérisées en ce que, comme composé organique du silicium, on utilise un composé de formule générale $Y_3SiX$ dans laquelle :

Y signifie un alcoxy, un aryloxy, un aralcoxy, un acyloxy, un cétoximyl, un mercapto, un halogéno et/ou un pseudo-halogéno, et

X signifie un alcoyle, un aryle, un aralcoyle, un alcényle, un cycloalcényle, un vinyle et/ou des analogues substitués par un hétéro atome.

3. Mode d'exécution selon les revendications 1 et 2, caractérisé en ce que, comme composé organique du silicium, on utilise un composé de formule générale

$(ZO)_3\text{-}SiX$

dans laquelle Z est $\text{-}R$, $\text{-}R^1\text{-}OR$ ou $\text{-}C(O)R^2$, et R signifie un radical hydrocarboné monovalent linéaire ou ramifié, ayant de 1 à 24 atomes de carbone, un cycloalcoyle ayant de 1 à 8 atomes de carbone, un aryle ayant de 6 à 10 atomes de carbone ou un aralcoyle ayant de 7 à 15 atomes de carbone,

$R^1$ signifie un radical hydrocarboné divalent linéaire ou ramifié ayant de 2 à 10 atomes de carbone, et

$R^2$ est un radical hydrocarboné monovalent, linéaire ou ramifié, ayant de 1 à 10 atomes de carbone.

4. Mode d'exécution selon les revendications 1 à 3, caractérisé en ce que, comme dérivé organique du silicium, on utilise un composé de formule générale :

$(ZO)_3\ SiX$

dans laquelle :

X signifie $\text{-}R^2\text{-}V$ avec V = halogèno, mercapto, amino, diméthylamino, carbamoyloxy, ureido, azido, thiocyanato, isocyanato, méthacryloxy, 3,4-époxycyclohexyl, 2,3-époxypropoxy ou le groupe $\text{-}NH\text{-}R^2\text{-}Si(OZ)_3$ ou $\text{-}S_4\text{-}R^2\text{-}Si(OZ)_3$, et

$R^2$ est un radical hydrocarboné divalent, linéaire ou ramifié, ayant de 1 à 10 atomes de carbone, en particulier 1,3-propylène.